# EUROPEAN PATENT APPLICATION

(11) **EP 4 047 458 A1**
(43) Date of publication of application: **24.08.2022**
(21) Application number: 21769760.6
(22) Date of filing: 05.08.2021
(51) Int. Cl.: G06F 3/0346, G06T 19/20, G09G 5/38, G06F 3/03, G06F 3/01

(54) **THREE-DIMENSIONAL GRAPHICS GENERATION SYSTEM**

(30) Priority: 07.08.2020 ES 202030847
(71) Applicant: Hontecillas Ascasibar, Ioritz, 20100 Lezo (ES)
(72) Inventor: Hontecillas Ascasibar, Ioritz, 20100 Lezo (ES)
(74) Representative: Igartua, Ismael
(86) International application number: PCT/ES2021/070593
(87) International publication number: WO 2022/029356

(57) **Abstract**

Three-dimensional graphics generation system comprising a graphics generation software and an input peripheral device, the input peripheral device comprising a reference element (1) and a movable element (2), with both elements being located in a real environment (3), the graphics generation software being configured for representing at least one stationary object (4) and at least one movable object (5) in a virtual environment (6) and for moving the movable object (5) relative to the stationary object (4) in real time replicating the movement of the movable element (2) relative to the reference element (1), with the reference element (1) being configured for being dynamically associated with different stationary virtual objects (4), and the movable element (2) for being dynamically associated with different movable virtual objects (5).

## Description

### TECHNICAL FIELD

The present invention relates to a three-dimensional graphics generation system and a method for moving a movable object relative to a stationary object in a virtual environment represented by means of a three-dimensional graphics generation software.

### PRIOR ART

The use of three-dimensional or 3D graphics generation systems is known. When working with a 3D graphics generation software, a 3D graphic designer works in a three-dimensional environment but uses, however, two-dimensional or 2D input peripheral devices such as mouse devices or graphics tablets that make it difficult to define the position and movement of an object represented by means of the 3D graphics generation system.

US20020175897A1 describes a hands-free input device comprising a processor module which calculates the position and orientation angles of a user's head. To that end, the input device comprises an accessory for the user's head and a monitoring unit. The monitoring unit is located in a display monitor. The accessory for the head and the monitoring unit comprise infrared emitters and an array of photodetectors located around the infrared emitters for receiving the infrared beam irradiated by the other unit. The processor module receives and combines the output signals of the photodetectors to calculate the position and orientation of the user's head relative to the monitoring unit located on the display monitor.

### DISCLOSURE OF THE INVENTION

The object of the invention is to provide a three-dimensional graphics generation system and a method for moving a movable object relative to a stationary object in a virtual environment represented by means of a three-dimensional graphics generation software, as defined in the claims.

The three-dimensional graphics generation system of the invention comprises a graphics generation software and an input peripheral device. The input peripheral device comprises a reference element and a movable element, with both elements being located in a real environment and the movable element being configured for being moved relative to the reference element by a user, and at least one sensor configured for emitting a signal representative of a distance, a position, and an orientation of the movable element relative to the reference element in real time.

The graphics generation system comprises processing means configured for receiving the signal representative of the distance, the position, and the orientation of the movable element relative to the reference element and transmitting said distance, position, and orientation to the graphics generation software in real time.

The graphics generation software is configured for representing at least one stationary object and at least one movable object in a virtual environment and for moving the movable object relative to the stationary object in real time replicating the movement of the movable element relative to the reference element according to the distance, the position, and the orientation of the movable element relative to the reference element received from the processing means.

The reference element of the system of the invention is configured for being dynamically associated with different stationary virtual objects, and the movable element is configured for being dynamically associated with different movable virtual objects.

A second aspect of the invention relates to a method for moving a movable object relative to a stationary object in a virtual environment represented by means of a three-dimensional graphics generation software comprising a movement step in which a movable element is moved by a user relative to a reference element, with both elements being located in a real environment; a data capture and processing step in which a sensor emits a signal representative of the distance, the position, and the orientation of the movable element relative to the reference element, and processing means receive the signal and transmit the distance, the position, and the orientation of the movable element relative to the reference element to the graphics generation software in real time; and a representation step in which the graphics generation software represents the movement of the movable object relative to the stationary object in real time replicating the movement of the movable element relative to the reference element according to the distance, the position, and the orientation of the movable element relative to the reference element received from the processing means.

The method of the invention comprises a reference element association step in which the reference element is associated with the stationary object, and a movable element association step in which the movable element is associated with the movable object, with both association steps being prior to the movement step.

By means of the three-dimensional graphics generation system of the invention, the positioning or the movement of any movable object relative to any stationary object in the virtual environment represented by means of the 3D graphics generation software can be performed in a simple manner by the user, by simply replicating the movement of the movable element relative to the reference element in the real environment, without the user needing to manually input the position or the path of the movement of the movable object by means of commands from the 3D graphics generation software.

These and other advantages and features of the invention will become apparent in view of the figures and detailed description of the invention.

### DESCRIPTION OF THE DRAWINGS

Figure 1 shows an embodiment of the three-dimensional graphics generation system of the invention with the reference element in a first position.
Figure 2 shows the embodiment of Figure 1, wherein an additional stationary object and an additional movable object are shown in the virtual environment.
Figure 3 shows the embodiment of Figure 1, with the reference element in a second position.

### DETAILED DISCLOSURE OF THE INVENTION

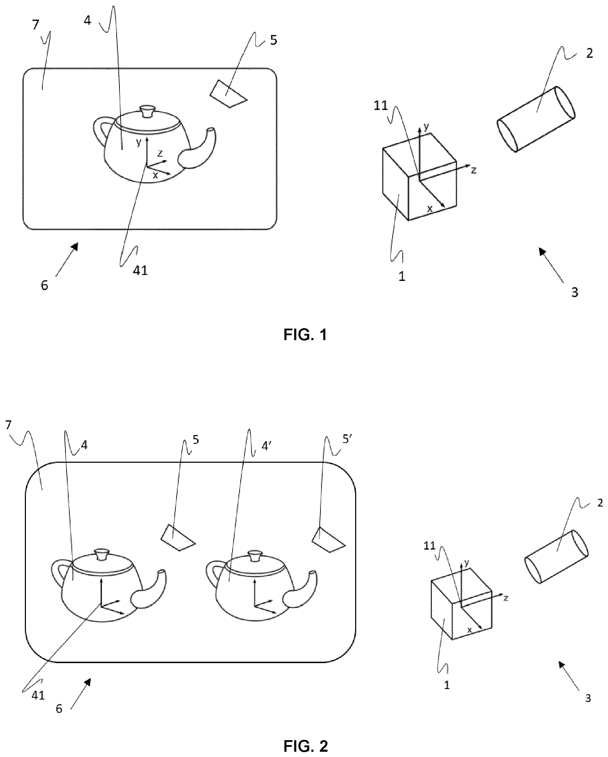

Figures 1 to 3 relate to an embodiment of the three-dimensional graphics generation system according to the invention.

The three-dimensional graphics generation system of the invention comprises a three-dimensional or 3D graphics generation software and a three-dimensional or 3D input peripheral device. The input peripheral device comprises a reference element 1 and a movable element 2, with both elements being located in a real environment 3 and the movable element 2 being configured for being moved relative to the reference element 1 by a user. The input peripheral device comprises at least one sensor configured for emitting a signal representative of a distance, a position, and an orientation of the movable element 2 relative to the reference element 1 in real time.

The graphics generation system comprises processing means configured for receiving the signal representative of the distance, the position, and the orientation of the movable element 2 relative to the reference element 1 and transmitting said distance, position, and orientation to the graphics generation software in real time.

The graphics generation software is configured for representing at least one stationary object 4 and at least one movable object 5 in a virtual environment 6 and for moving the movable object 5 relative to the stationary object 4 in real time replicating the movement of the movable element 2 relative to the reference element 1 according to the distance, the position, and the orientation of the movable element 2 relative to the reference element 1 received from the processing means.

The reference element 1 of the system of the invention is configured for being dynamically associated with different stationary virtual objects, and the movable element 2 is configured for being dynamically associated with different movable virtual objects.

In the context of the invention, real environment 3 is understood to mean a real physical space in which both the reference element 1 and the movable element 2 are located, with both the reference element 1 and the movable element 2 being real objects with which the user can interact.

In the context of the invention, virtual environment 6 is understood to mean a virtual space representing a real or imaginary environment in which a plurality of virtual objects is represented. The virtual objects are objects represented in the virtual environment 6 but are not part of the real environment 3.

In the context of the invention, the user of the input peripheral device is a 3D graphic designer. By means of using the graphics generation software, the user can create, by means of using the commands, primitives, or options available in said software, both the virtual environment 6 and the virtual objects represented in said virtual environment 6. The graphics generation software is also configured for allowing interaction with the virtual objects. Examples of said interactions include moving, resizing, rotating, etc., the virtual objects in the virtual environment 6.

In the context of the invention, the graphics generation software is a 3D graphics generation software. At present there are a number of 3D graphics and animation generation software programs, such as Cinema 4D, 3D Studio Max, Maya, etc. The 3D graphics generation system is valid for use with computer-aided design or CAD software for 3D modeling, such as AutoCAD, Solidworks, Catia, NX by Siemens, etc. However, the preceding examples are not intended to be a limitation of the invention, and the system of the invention can be used with any software with a three-dimensional interface which requires moving and/or rotating objects in a three-dimensional environment.

The input peripheral device of the graphics generation system of the invention comprises at least one sensor configured for emitting a signal representative of the distance, the position, and the orientation of the movable element 2 relative to the reference element 1 in real time. In the state of the art, inertial measurement units, accelerometers, gyroscopes, etc. are known to be used to determine the orientation of an object, and distance sensors, such as photosensors, ultrasound sensors configured for measuring distances based on the time it takes a signal to arrive, etc., are known to be used to determine the distance between two objects, and the position of one object relative to the other. Cameras are also known to be used, such that by means of processing the images captured by said cameras, the distance, the position, and the orientation of one object relative to the other are determined. The signal emitted by the sensor is received by the processing means and can be transmitted in a wired or wireless manner.

The sensor emits a signal representative of the distance, the position, and the orientation of the movable element 2 relative to the reference element 1 in real time, which is received by the processing means, which transmit said distance, position, and orientation to the graphics generation software in real time. The processing means comprise at least one processor configured for executing the commands of a computer program of the input peripheral device, at least one memory configured for storing the computer program, and at least other data associated with the execution of the program, and input and output interfaces configured for communicating with input and output peripheral devices. In one embodiment of the invention, the processing means are configured for executing the 3D graphics generation software and for executing the computer program associated with the input peripheral device. In one embodiment of the system of the invention, the computer program associated with the input peripheral device is a plugin or code fragment configured for enhancing the functions of a program or a tool, that in the case of the invention is the 3D graphics generation software. However, this configuration is not intended to be a limitation of the invention, and in other embodiments of the invention communication between the computer program associated with the input peripheral device, the processing means configured for executing the commands of said program, and the 3D graphics generation software can be of another type. Since the computer program associated with the input peripheral device is executed by the processing means, it is configured for receiving the signal representative of the distance, the position, and the orientation of the movable element 2 relative to the reference element 1 and transmitting said distance, position, and orientation to the graphics generation software in real time.

Figure 1 shows an embodiment of the graphics generation system of the invention. In this embodiment, the reference element 1 is cube-shaped and the movable element 2 is cylinder-shaped. In other embodiments, however, the reference element 1 and the movable element 2 can have other shapes which allow the reference element 1 to remain immobile, supported for example on a surface, and the movable element 2 to be moved by a user, gripped for example with a hand.

The graphics generation software is configured for representing at least one stationary object 4 and at least one movable object 5 in a virtual environment 6, with both the stationary object 4 and the movable object 5 being virtual objects represented in the virtual environment 6 by means of the graphics generation software. The virtual environment 6 is shown in a display system configured for showing a three-dimensional or 3D virtual environment 6 to the user. In the embodiment shown in Figure 1, the display system is a display screen 7, but in other embodiments it could be a display monitor connected to a personal computer, a television set, a mobile phone display screen, virtual reality glasses, or any other device capable of showing a three-dimensional or 3D virtual environment 6.

The 3D graphics generation software is configured for representing at least one stationary object 4 and one movable object 5 in a virtual environment 6. To that end, in one embodiment of the invention, the graphics generation software comprises a universal coordinate system relative to which it positions the stationary object 4 and the movable object 5, as well as the remaining virtual objects, if there are any, in the virtual environment 6.

The embodiment of Figure 1 shows the reference element 1 and the movable element 2 in the real environment 3, and the stationary object 4 and the movable object 5 in the virtual environment 6 which is represented on the display screen 7. In said embodiment, the stationary object 4 is a teapot and the movable object 5 is a spotlight. By the user associating the reference element 1 with the stationary object 4 and the movable element 2 with the movable object 5, when the user moves the movable element 2 relative to the reference element 1 in the real environment 3, the graphics generation software replicates said movement in the virtual environment 6 in real time, moving the movable object 5 relative to the stationary object 4 the same way that the user moves the movable element 2 relative to the reference element 1 in the real environment 3. The user, i.e., the 3D graphic designer, can thereby see in a simple manner how the manner in which the teapot is illuminated changes, and how the shadow cast by the teapot changes as the spotlight moves. For the sake of clarity, lights and shadows are not shown in the figures, rather only the objects are shown. To that end, the user does not need to modify by means of commands the position of the spotlight relative to the teapot, but rather can naturally position the movable element 2 relative to the reference element 1 in different positions, seeing the effect of said changes in position on the display screen 7 in real time. This application of the graphics generation system of the invention is not intended to be a limitation, and the system can be used in any other application.

If the user then wants to position an additional movable object 5' relative to the stationary object 4, the user may maintain the association that was previously performed in which the reference element 1 was associated with the stationary object 4, and the movable element 2 is now associated with the additional movable object 5'. Likewise, instead of maintaining the association that had previously been performed, the user could associate the reference element 1 with the stationary object 4 again. Therefore, when the user moves the movable element 2 relative to the reference element 1 in the real environment 3, the graphics generation software will replicate said movement in the virtual environment 6 in real time, in this case moving the additional movable object 5' relative to the stationary object 4 the same way that the user moves the movable element 2 relative to the reference element 1 in the real environment 3.

If the user then wants to position an additional movable object 5' relative to the additional stationary object 4', the user must maintain the association that had previously been performed in which the movable element 2 was associated relative to the additional movable object 5', and in this case the reference element 1 is associated with the additional stationary object 4'. Likewise, instead of maintaining the association that had previously been performed, the user could associate the movable element 2 with the additional movable object 5' again. Therefore, when the user moves the movable element 2 relative to the reference element 1 in the real environment 3, the graphics generation software will replicate said movement in the virtual environment 6 in real time, in this case moving the additional movable object 5' relative to the additional stationary object 4' the same way that the user moves the movable element 2 relative to the reference element 1 in the real environment 3.

In one embodiment of the graphics generation system, the association of the reference element 1 with the stationary object 4 and the association of the movable element 2 with the movable object 5 can be performed by means of commands from the 3D graphics generation software. In other embodiments of the input peripheral device, however, said associations can be performed by means of a selector located in the reference element, a selector located in the movable element, or by means of another technical solution known in the state of the art.

By means of the graphics generation system of the invention, the user can associate the reference element 1 with any stationary object 4 represented in the virtual environment 6 such that said association is dynamic, i.e., at a later time the user can associate the reference element 1 with any other stationary object 4. By means of the graphics generation system of the invention, the user can associate the movable element 2 with any movable object 5 represented in the virtual environment 6 such that said association is dynamic, i.e., at a later time the user can associate the movable element 2 with any other movable object 5. In the context of the invention, a stationary virtual object, or a stationary object 4 is any virtual object represented in the virtual environment 6 relative to which another virtual object is moved. In the context of the invention, a movable virtual object, or a movable object 5 is any virtual object represented in the virtual environment 6 which is moved relative to another virtual object. All this allows the positioning, or the movement of any movable object 5 relative to any stationary object 4 in the virtual environment 6 represented by means of the 3D graphics generation software to be carried out in a simple manner by the user, replicating the movement of the movable element 2 relative to the reference element 1 in the real environment 3, without the user needing to input manually the position or the movement of the movable object 5 by means of commands from the 3D graphics generation software.

In one embodiment of the graphics generation system, the reference element 1 comprises the sensor, said sensor being configured for emitting the signal representative of the distance, the position, and the orientation of the movable element 2 relative to the reference element 1.

In another embodiment of the graphics generation system, the input peripheral device comprises an additional element in the real environment 3 comprising the sensor. In this embodiment, the sensor is arranged in the additional element, which is an element other than the reference element 1 and other than the movable element 2.

In one embodiment of the graphics generation system, the movable element 2 comprises the sensor.

In one embodiment of the graphics generation system, the movable element 2 is a smartphone. In this embodiment, the smartphone is configured for emitting the signal representative of the distance, the position, and the orientation of the smartphone relative to the reference element 1.

In one embodiment of the graphics generation system, the reference element 1 is an object shown in augmented reality, and the movable element 2 is an electronic device configured for showing the reference element 1 in augmented reality, the movable element 2 comprising a sensor program code executable in said movable element 2 configured for emitting the signal representative of the distance, the position, and the orientation of the movable element 2 relative to the reference element 1 shown in said electronic device in real time. In said embodiment, the sensor is said sensor program code. The electronic device comprises a processing unit and a non-transitory computer-readable medium configured for storing the sensor program code, with the processing unit being configured for executing said sensor program code. The electronic device comprises a network I/O interface configured for communicating the electronic device with other computer systems through a data network or in a wireless manner. The reference element 1 shown in the electronic device is the reference element 1 which is configured for being dynamically associated with the different stationary virtual objects 4. The electronic device can be an electronic tablet, a smartphone, augmented reality glasses, or any other electronic device known in the state of the art capable of displaying at least one object in augmented reality. At present, algorithms for determining the distance, the position, and the orientation of an electronic device in which an object is shown in augmented reality relative to said object are known; therefore, the skilled person would know how to implement a sensor program code based on one of said algorithms.

In one embodiment of the graphics generation system, the input peripheral device comprises a scale selector configured so that the user can select a scale, such that the distance between the stationary object 4 and the movable object 5 in the virtual environment 6 is the distance between the movable element 2 and the reference element 1 in said scale. Depending on what is represented in the virtual environment 6, the distance between the reference element 1 and the movable element 2, which in the real environment 3 is usually tens of centimeters, may not be suitable. By means of the scale selector, the user can define the scale necessary, depending on what is represented in the virtual environment 6, for the distance of tens of centimeters between the reference element 1 and the movable element 2 in the real environment 3 to correspond with a distance of kilometers, of millimeters, etc., in said scale in the virtual environment 6.

In one embodiment of the graphics generation system, the stationary object 4 is a point in the virtual environment 6. Sometimes, it is necessary to position or move a virtual object in the virtual environment 6 relative to a point of said virtual environment 6, and not relative to a virtual object. The graphics generation system of the invention allows the reference element 1 to be associated with a point of the virtual environment 6, such that the movement of the movable element 2 relative to the reference element 1 will be represented in the virtual environment 6 as the movement of the movable object 5 relative to said point, wherein the point in the virtual environment 6 is defined by its position relative to the universal coordinate system of the graphics generation software.

In one embodiment of the graphics generation system of the invention, the reference element 1 has an associated reference coordinate system 11, and the stationary object 4 has an associated X,Y,Z coordinate system 41 representing the reference coordinate system 11 in the virtual environment 6. In this embodiment, by moving the reference element 1 in the real environment 3, the stationary object 4 and the associated X,Y,Z coordinate system 41 remain immobile, the reference coordinate system 11 changing position in the real environment 3. In this embodiment, the signal emitted by the sensor is a signal representative of the distance, the position, and the orientation of the movable element 2 relative to the reference coordinate system 11 of the reference element 1, and the graphics generation software is configured for moving the movable object 5 relative to the X,Y,Z coordinate system 41 of the stationary object 4 in real time replicating the movement of the movable element 2 relative to the reference coordinate system 11 of the reference element 1 according to the distance, the position, and the orientation of the movable element 2 relative to reference element 1 received from the processing means.

In this embodiment of the graphics generation system, the reference element 1 has an X axis, a Y axis, and a Z axis associated with and perpendicular to one another, and intersecting at a point or origin, defining between the three axes the reference coordinate system 11 on the basis of which the movable element 2 is positioned in the real environment 3. In the same manner, each stationary object 4 represented in the virtual environment 6 has an X axis, a Y axis, and a Z axis associated with and perpendicular to one another, and intersecting at a point or origin, defining between the three axes a coordinate system X, Y, Z 41 on the basis of which the movable object 5 is positioned or is moved in the virtual environment 6 by means of using the system of the invention. Therefore, when the reference element 1 is associated with the stationary object 4, the X,Y,Z coordinate system 41 associated with the stationary object 4 represents the reference coordinate system 11 of the reference element 1 in the virtual environment 6.

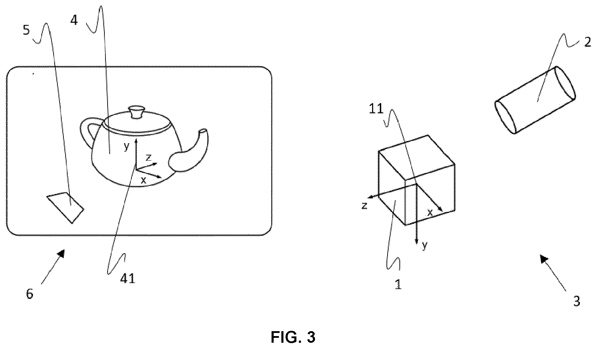

Figure 1 shows this embodiment of the graphics generation system, wherein the reference element 1 is associated with the stationary object 4 and the movable element 2 is associated with the movable object 5, with the reference element 1 being in a first position. Figure 3 shows this embodiment of the graphics generation system of the invention with the reference element 1 in a second position, wherein the user has rotated the reference element 1 180° around the X axis of its reference coordinate system 11, such that the Y axis and the Z axis of the reference coordinate system 11 are pointing in the opposite direction with respect to where they were pointed before rotating the reference element 1. Therefore, by rotating the reference element 1, the reference coordinate system 11 changes position in the real environment 3. However, the movement of the reference element 1 in the real environment 3, and the change in position of its reference coordinate system 11 have no effect in the virtual environment 6, wherein the stationary object 4 is not moved, and the X,Y,Z coordinate system 41 associated with said stationary object 4 remains in the same position, as shown in Figure 3. Therefore, if the movable element 2 was initially positioned at coordinates (50, 60, 70) relative to the reference coordinate system 11 associated with the reference element 1, once the reference element 1 is rotated 180° around the X axis of said reference coordinate system 11, if the movable element 2 is not moved, it will be positioned at coordinates (50, -60, -70) relative to the reference coordinate system 11. As a result of all this, the movable object 5 changes position in the virtual environment 6 from the first position shown in Figure 1 to a second position shown in Figure 3, without the movable element 2 having been moved in the real environment 3, with the reference element 1 having simply changed position from the position shown in Figure 1 to the position shown in Figure 3. Therefore, in the embodiment shown in Figure 3, if the user moves the movable element 2 above the reference element 1 from one side to the other of the X axis of its reference coordinate system 11, in the virtual environment 6, the movable object 5 will be moved below the stationary object 4 from one side to the other of the X axis of its X,Y,Z coordinate system 41.

All this allows the positioning, or the movement of the movable object 5 relative to the stationary object 4 in the virtual environment 6 represented by means of the 3D graphics generation software to be carried out in a simple manner by the user, replicating the movement of the movable element 2 relative to the reference element 1 in the real environment 3, such that in the case where said movement is not natural or easy to perform in the real environment 3 for the user, the user can modify the position of the reference coordinate system 11 with the reference element 1 changing position.

In one embodiment of the graphics generation system, the processing means are configured for applying a compensation value previously defined by the user on at least one axis of the reference coordinate system 11 to the position of the movable element 2 relative to the reference element 1. Therefore, if the user of the system defines, for example, a compensation value on the X axis of the reference coordinates 11 equal to 5, if at a given time the movable element 2 is positioned at coordinates (10,10,10) relative to the reference coordinate system 11 associated with the reference element 1, the graphics generation software will represent the movable object at position (15,10,10) relative to the X,Y,Z coordinate system 41. The user can define the compensation value on each of the axes of the reference coordinate system 11 by means of commands from the 3D graphics generation software. In other embodiments of the system, however, said associations can be performed by means of a selector located in the reference element 1, a selector located in the movable element 2, or by means of another technical solution known in the state of the art.

The invention also relates to an input peripheral device that is part of the three-dimensional graphics generation system according to the invention.

A second aspect of the invention relates to a method for moving a movable object 5 relative to a stationary object 4 in a virtual environment 6 represented by means of a three-dimensional graphics generation software comprising a movement step in which a movable element 2 is moved by a user relative to a reference element 1, with both elements being located in a real environment 3. The method of the invention comprises a data capture and processing step in which a sensor emits a signal representative of the distance, the position, and the orientation of the movable element 2 relative to the reference element 1, and processing means receive the signal and transmit the distance, the position, and the orientation of the movable element 2 relative to the reference element 1 to the graphics generation software in real time. The method of the invention comprises a representation step in which the graphics generation software represents in real time the movement of the movable object 5 relative to the stationary object 4 replicating the movement of the movable element 2 relative to the reference element 1 according to the distance, the position, and the orientation of the movable element 2 relative to the reference element 1 received from the processing means. The method of the invention is characterized in that it comprises a reference element 1 association step in which the reference element 1 is associated with the stationary object 4, and a movable element 2 association step in which the movable element 2 is associated with the movable object 5, with both association steps being prior to the movement step.

In one embodiment, the method of the invention comprises a scale selection step, wherein the user selects a scale such that the distance between the stationary object 4 and the movable object 5 in the virtual environment 6 is the distance between the movable element 2 and the reference element 1 in said scale.

In one embodiment of the method of the invention, the stationary object 4 is a point in the virtual environment 6.

In one embodiment, the method of the invention comprises a reference element 1 positioning step before the movement step in which the user positions the reference element 1 in the real environment 3, wherein the reference element 1 has an associated reference coordinate system 11, and wherein the stationary object 4 has an associated X,Y,Z coordinate system 41 representing the reference coordinate system 11 in the virtual environment 6, such that by positioning the reference element 1 in the real environment 3, the stationary object 4 and the associated X,Y,Z coordinate system 41 remain immobile, the reference coordinate system 11 changing position in the real environment 3, and wherein in the representation step, the graphics generation software represents the movement of the movable object 5 relative to the X,Y,Z coordinate system 41 of the stationary object 4 in real time replicating the movement of the movable element 2 relative to the reference coordinate system 11 of the reference element 1 according to the distance, the position, and the orientation of the movable element 2 relative to the reference element 1 received from the processing means, with the sensor being configured for emitting a signal representative of the distance, the position, and the orientation of the movable element 2 relative to the reference coordinate system 11 of the reference element 1.

In one embodiment, the method of the invention comprises a compensation value selection step, wherein the user selects a compensation value on at least one axis of the reference coordinate system 11 with respect to the position of the movable element 2 relative to the reference element 1.

All that has been described for the three-dimensional graphics generation system is considered as having also been described for the associated method and vice versa.

## Claims

1. Three-dimensional graphics generation system comprising a graphics generation software and an input peripheral device, the input peripheral device comprising
- a reference element (1) and a movable element (2), with both elements being located in a real environment (3) and the movable element (2) being configured for being moved relative to the reference element (1) by a user, and
- at least one sensor configured for emitting a signal representative of a distance, a position, and an orientation of the movable element (2) relative to the reference element (1) in real time,
the graphics generation system comprising processing means configured for receiving the signal representative of the distance, the position, and the orientation of the movable element (2) relative to the reference element (1) and transmitting said distance, position, and orientation to the graphics generation software in real time, and
the graphics generation software being configured for representing at least one stationary object (4) and at least one movable object (5) in a virtual environment (6) and for moving the movable object (5) relative to the stationary object (4) in real time replicating the movement of the movable element (2) relative to the reference element (1) according to the distance, the position, and the orientation of the movable element (2) relative to the reference element (1) received from the processing means,
**characterized in that** the reference element (1) is configured for being dynamically associated with different stationary virtual objects (4), and the movable element (2) is configured for being dynamically associated with different movable virtual objects (5).

2. Graphics generation system according to claim 1, wherein the reference element (1) comprises the sensor.

3. Graphics generation system according to claim 1, comprising an additional element in the real environment (3) comprising the sensor.

4. Graphics generation system according to claim 1, wherein the movable element (2) comprises the sensor.

5. Graphics generation system according to claim 4, wherein the movable element (2) is a smartphone.

6. Graphics generation system according to claim 4, wherein the reference element (1) is an object shown in augmented reality, and the movable element (2) is an electronic device configured for showing the reference element (1) in augmented reality, the movable element (2) comprising a sensor program code executable in said movable element (2) configured for emitting the signal representative of the distance, the position, and the orientation of the movable element (2) relative to the reference element (1) shown in said electronic device in real time.

7. Graphics generation system according to any of the preceding claims, comprising a scale selector configured so that the user can select a scale, such that the distance between the stationary object (4) and the movable object (5) in the virtual environment (6) is the distance between the movable element (2) and the reference element (1) in said scale.

8. Graphics generation system according to any of the preceding claims, wherein the stationary object (4) is a point in the virtual environment (6).

9. Graphics generation system according to any of the preceding claims, wherein the reference element (1) has an associated reference coordinate system (11), and the stationary object (4) has an associated X,Y,Z coordinate system (41) representing the reference coordinate system (11) in the virtual environment (6), such that by moving the reference element (1) in the real environment (3), the stationary object (4) and the associated X,Y,Z coordinate system (41) remain immobile, the reference coordinate system (11) changing position in the real environment (3), with the signal emitted by the sensor being a signal representative of the distance, the position, and the orientation of the movable element (2) relative to the reference coordinate system (11) of the reference element (1), and the graphics generation software being configured for moving the movable object (5) relative to the X,Y,Z coordinate system (41) of the stationary object (4) in real time replicating the movement of the movable element (2) relative to the reference coordinate system (11) of the reference element (1) according to the distance, the position, and the orientation of the movable element (2) relative to reference element (1) received from the processing means.

10. Graphics generation system according to claim 9, wherein the processing means are configured for applying a compensation value previously defined by the user on at least one axis of the reference coordinate system (11) to the position of the movable element (2) relative to the reference element (1).

11. Input peripheral device that is part of the three-dimensional graphics generation system according to any of the preceding claims.

12. Method for moving a movable object (5) relative to a stationary object (4) in a virtual environment (6) represented by means of a three-dimensional graphics generation software comprising
- a movement step in which a movable element (2) is moved by a user relative to a reference element (1), both elements being located in a real environment (3),
- a data capture and processing step in which a sensor emits a signal representative of the distance, the position, and the orientation of the movable element (2) relative to the reference element (1), and processing means receive the signal and transmit the distance, the position, and the orientation of the movable element (2) relative to the reference element (1) to the graphics generation software in real time, and
- a representation step in which the graphics generation software represents in real time the movement of the movable object (5) relative to the stationary object (4) replicating the movement of the movable element (2) relative to the reference element (1) according to the distance, the position, and the orientation of the movable element (2) relative to the reference element (1) received from the processing means,
**characterized in that** it comprises
- a reference element (1) association step in which the reference element (1) is associated with the stationary object (4), and
- a movable element (2) association step in which the movable element (2) is associated with the movable object (5), both association steps being prior to the movement step.

13. Method according to claim 12, comprising a scale selection step, wherein the user selects a scale such that the distance between the stationary object (4) and the movable object (5) in the virtual environment (6) is the distance between the movable element (2) and the reference element (1) in said scale.

14. Method according to claim 12 or 13, comprising a reference element (1) positioning step before the movement step in which the user positions the reference element (1) in the real environment (3), wherein the reference element (1) has an associated reference coordinate system (11), and wherein the stationary object (4) has an associated X,Y,Z coordinate system (41) representing the reference coordinate system (11) in the virtual environment (6), such that by positioning the reference element (1) in the real environment (3), the stationary object (4) and the associated X,Y,Z coordinate system (41) remain immobile, the reference coordinate system (11) changing position in the real environment (3), and wherein in the representation step, the graphics generation software represents in real time the movement of the movable object (5) relative to the X,Y,Z coordinate system (41) of the stationary object (4) replicating the movement of the movable element (2) relative to the reference coordinate system (11) of the reference element (1) according to the distance, the position, and the orientation of the movable element (2) relative to the reference element (1) received from the processing means, with the sensor being configured for emitting a signal representative of the distance, the position, and the orientation of the movable element (2) relative to the reference coordinate system (11) of the reference element (1).

15. Method according to claim 14, comprising a compensation value selection step, wherein the user selects a compensation value on at least one axis of the reference coordinate system (11) with respect to the position of the movable element (2) relative to the reference element (1).
